# FASCICULE DE BREVET EUROPEEN

(11) **EP 2 867 071 B1**
(45) Date de publication et mention de la délivrance du brevet: **18.05.2016**
(21) Numéro de dépôt: 13737323.9
(22) Date de dépôt: 14.06.2013
(51) Int. Cl.: B60R 21/34, B62D 25/10

(54) **CAPOT AVANT DE VÉHICULE AUTOMOBILE ADAPTÉ POUR LE CHOC HANCHE ET VÉHICULE AUTOMOBILE COMPORTANT UN TEL CAPOT AVANT**
FRONTHAUBE FÜR KRAFTFAHRZEUGE MIT EINEM BECKEN-UNFALLSCHUTZ UND EIN KRAFTFAHRZEUG MIT EINER SOLCHEN FRONTHAUBE
A VEHICLE FRONT BONNET WITH AN ACCIDENT PROTECTION FOR PELVIS AND A VEHICLE COMPRISING SUCH A BONNET

(30) Priorité: 29.06.2012 FR 1256267
(43) Date de publication de la demande: 06.05.2015
(73) Titulaire: Renault S.A.S., 92100 Boulogne-Billancourt (FR)
(72) Inventeur: ZANOLIN, Dominique, F-78150 Le Chesnay (FR); BILLON, Florent, F-78000 Versailles (FR)
(86) Numéro de dépôt international: PCT/FR2013/051403
(87) Numéro de publication internationale: WO 2014/001688

(56) Documents cités:
- WO-A1-2012/146851
- DE-A1-102005 036 171
- US-A1- 2009 121 519

## Description

### Domaine technique de l'invention

L'invention concerne les véhicules automobiles, et notamment les structures de capot avant de véhicule automobile, destinées à résister aux différents types de chocs, notamment du type « choc hanche ».

L'invention concerne plus particulièrement un capot avant de véhicule automobile comportant une première paroi intérieure et une seconde paroi extérieure reliées entre elles et des moyens de liaison à la carrosserie du véhicule, ladite paroi intérieure comportant au moins un premier orifice de forme sensiblement rectangulaire, lequel premier orifice :
- est orienté transversalement par rapport à un axe longitudinal du véhicule,
- est agencé au niveau d'un bord avant de ladite paroi intérieure.

### Etat de la technique

Les capots de véhicule automobile sont généralement formés d'une peau formant le côté visible du capot, ou paroi extérieure, et d'un renfort, appelé doublure, placé du côté invisible du capot, ou paroi intérieure. Afin de conférer au capot une tenue géométrique et de la raideur statique, la doublure et la peau sont collées et/ou serties sur la périphérie du capot, et des plots de calage, généralement en mastic de faible résistance, assurent une liaison entre la peau et la doublure sur le reste de la surface du capot.

Un capot avant de véhicule automobile est un élément mobile de carrosserie qui, fermé, protège un compartiment moteur et, ouvert, permet l'accès aux organes mécaniques pour l'entretien et la réparation notamment. Au fil des années, les normes de sécurité pour les véhicules automobiles sont devenues de plus en plus sévères, de sorte qu'il est nécessaire de prévoir un amortissement de l'énergie d'un choc, notamment, sur le capot avant, afin de minimiser les blessures engendrées par un tel choc. Afin de répondre à de telles normes de sécurité, des systèmes d'amortissement du capot ont déjà été proposés pour répondre aux différents critères de caractérisation de la sécurité d'un véhicule.

Notamment, afin de limiter les lésions du piéton dans le cas d'un choc du type « choc hanche », des efforts maximaux sont demandés lors de ce choc sur toute la partie avant du véhicule, plus particulièrement dans la zone du sertissage de capot au niveau d'un bord avant de ce capot. Or, cette zone emboutie du capot s'avère être une zone naturellement raide, comme décrit notamment dans le document US 2009/121519, sur lequel la préambule de la revendication 1 est basée.

Ainsi, il est nécessaire de trouver une solution spécifique au niveau du capot avant qui permette de répondre à des problématiques spécifiques liées aux différents chocs à subir, notamment du type « choc hanche », et des zones spécifiques du capot, notamment dues à des contraintes dimensionnelles fortes.

### Objet de l'invention

L'invention a pour objet la réalisation d'un capot avant de véhicule automobile qui respecte les différentes normes de sécurité en cas de choc avec un élément extérieur, notamment la hanche d'un piéton, quelles que soient les contraintes dimensionnelles imposées par le design de la face avant du véhicule.

L'objet de l'invention est caractérisé, plus particulièrement, par le fait que ladite paroi intérieure comporte un bossage central au niveau dudit bord avant, conformé pour s'adapter aux contraintes de la face avant du véhicule imposées par la présence d'une empreinte pour le logo de la marque du véhicule, et par le fait que ledit premier orifice est réalisé dans ledit bossage et comporte des dimensions prédéterminées, de sorte à piloter l'effort de déformation du capot en cas de choc au niveau dudit bord avant.

Un tel orifice agencé à cet endroit précis du capot permet ainsi de favoriser un travail en cisaillement de l'orifice pendant la déformation du capot consécutive à un choc, ce qui permet d'optimiser la déformation du capot.

D'autres avantages et caractéristiques de l'invention peuvent être considérées isolément ou en combinaison.
- Ledit premier orifice peut avoir une longueur comprise entre 60mm et 80mm, de préférence de l'ordre de 70mm, et une largeur comprise entre 5mm et 30mm, de préférence de l'ordre de 20mm, pour une longueur du capot de l'ordre de 750mm et une largeur du capot de l'ordre de 1440mm.
- Le capot peut comporter des orifices additionnels de forme sensiblement rectangulaire, ménagés dans ladite paroi intérieure.
- Lesdits orifices additionnels peuvent être orientés transversalement par rapport audit axe longitudinal du véhicule, sensiblement parallèlement audit premier orifice.
- Ladite paroi intérieure peut comporter deux orifices additionnels agencés au niveau dudit bord avant du capot et de part et d'autre dudit premier orifice selon l'axe longitudinal du véhicule.
- Ledit premier orifice peut avoir une longueur comprise entre 80mm et 150mm, de préférence de l'ordre de 90mm, et une largeur comprise entre 5mm et 30mm, de préférence de l'ordre de 10mm, et lesdits orifices additionnels peuvent avoir chacun une longueur comprise entre 80mm et 150mm, de préférence de l'ordre de 90mm, et une largeur comprise entre 5mm et 25mm, de préférence de l'ordre de 10mm.

L'invention a également pour objet un véhicule automobile respectant tous les critères de sécurité, notamment en cas d'un choc du type « choc hanche ».

Cet objet de l'invention est caractérisé en ce que le véhicule automobile comporte un tel capot avant.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente une vue en perspective et en coupe d'un premier mode de réalisation d'un capot avant de véhicule automobile selon l'invention, juste avant déformation par un élément extérieur venant sensiblement contre la face avant du véhicule.
La figure 2 est une vue partielle en perspective du capot avant selon la figure 1, représenté sans la paroi supérieure.
Les figures 3 à 6 représentent très schématiquement différentes étapes successives de déformation du capot avant selon les figures 1 et 2, lors d'un choc avec un élément extérieur.
La figure 7 représente schématiquement une vue de dessus d'une paroi intérieure d'une variante de réalisation d'un capot avant selon l'invention.

### Description de modes particuliers de réalisation

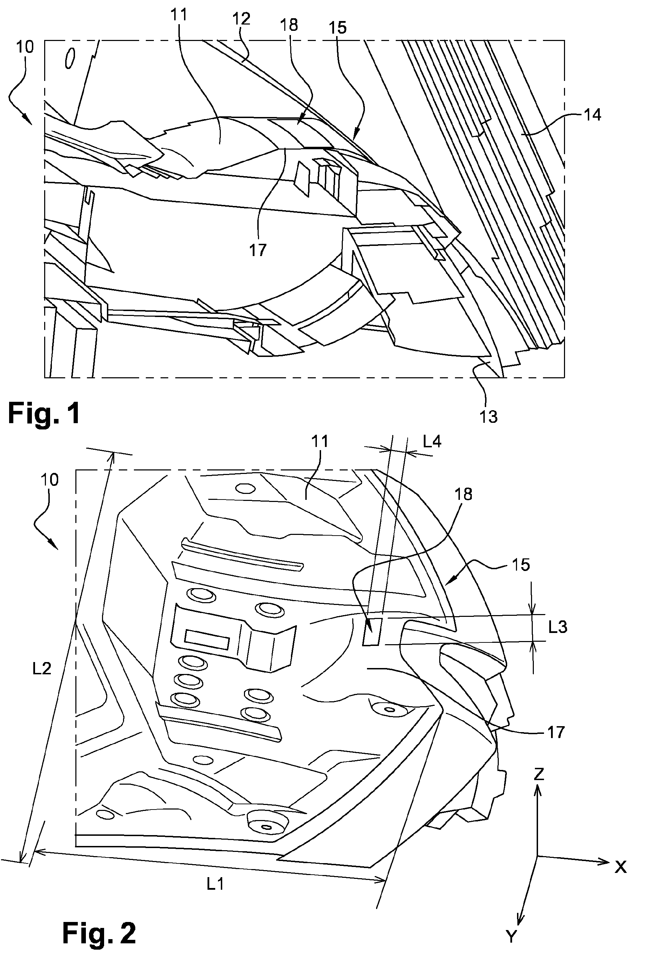

Dans la description qui va suivre, des éléments identiques ou analogues porteront les mêmes chiffres et nombres de référence. Les expressions telles que « arrière » et « avant », « gauche » et « droite », « supérieur » et « inférieur » et les orientations « longitudinale », « transversale » et « verticale » seront définies en référence au trièdre X, Y, Z représenté sur la figure 2 et aux définitions données dans la description. Notamment, la direction longitudinale X correspond au sens de déplacement en marche avant d'un véhicule automobile (non représenté entièrement sur les figures pour des raisons de clarté).

Sur les figures 1 et 2, illustrant un premier mode particulier de réalisation d'un capot avant 10 selon l'invention, le capot 10 comporte une première paroi intérieure 11, ou doublure de capot, et une seconde paroi extérieure 12, ou peau de capot. Les deux parois 11 et 12 sont reliées entre elles, notamment à leur périphérie, de sorte à former un capot 10 sensiblement creux (figure 1). Le capot avant 10 comporte également des moyens de liaison à la carrosserie 13 du véhicule.

Comme représenté plus particulièrement sur les figures 1 et 2, un élément extérieur 14, du type impacteur pour « choc hanche », vient en contact du capot 10 au niveau d'un bord avant 15 lors de tests spécifiques. Ici, le bord avant 15 comporte des contraintes dimensionnelles et de design importantes, notamment de par la présence d'une empreinte pour le logo de la marque, dessinée sur la face avant du véhicule. La paroi intérieure 11 comporte ainsi une conformation ou bossage 17, agencé au centre et à l'avant de la paroi intérieure 11, permettant d'adapter la forme du capot avant 10, plus particulièrement du bord avant 15 du capot avant 10, aux contraintes de la face avant du véhicule.

Or, dans le cas d'un impacteur 14 simulant un « choc hanche » et afin de limiter l'effort engendré par cet impacteur 14, il est nécessaire de limiter la raideur du capot 10 et du bord avant 15 de la doublure de capot. Le concept du capot avant 10 selon l'invention consiste donc à ménager un orifice 18 au niveau du bord avant 15 du capot 10, plus particulièrement dans le bossage 17 de la paroi intérieure 11 du capot avant, afin de créer des faiblesses dans cette zone de la doublure de capot et pouvoir piloter la déformation du capot 10 en cas de choc.

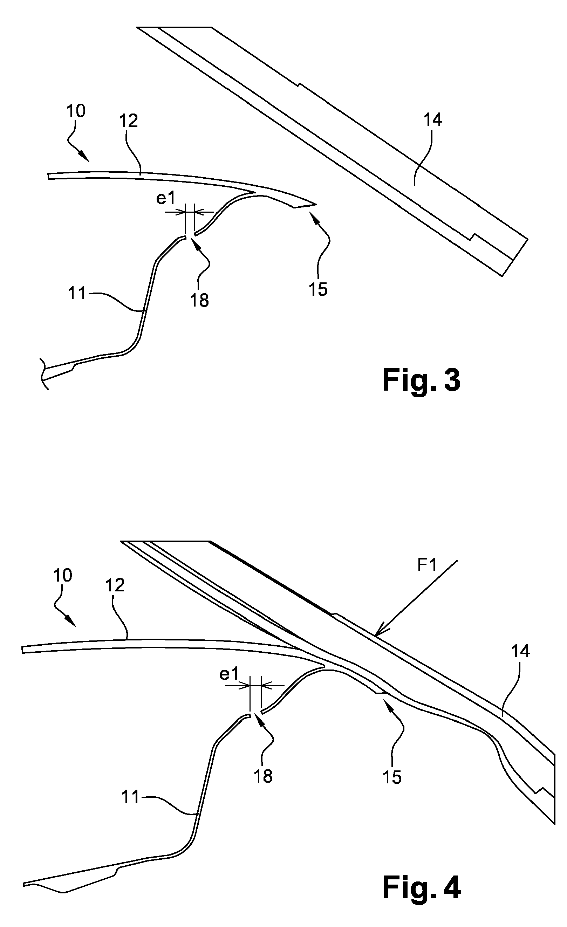

Sur les figures 1 et 2, l'orifice 18 est de forme sensiblement rectangulaire et orienté transversalement dans la paroi intérieure 11 du capot 10 selon l'axe transversal Y, à savoir perpendiculairement à l'axe longitudinal X du véhicule. L'orifice 18 est ménagé dans le bossage 17 de la paroi intérieure 11 du capot avant 10 et ses dimensions sont telles qu'elles permettent une déformation et un travail en cisaillement du capot avant 10, comme expliqué plus en détails ci-après au regard des figures 3 à 6.

A titre d'exemple, pour une longueur L1 du capot avant 10 de l'ordre de 750mm et une largeur L2 du capot avant 10 de l'ordre de 1440mm, la longueur L3 de l'orifice 18 est comprise entre 60mm et 80 mm, de préférence de l'ordre de 70mm, et la largeur L4 de l'orifice 18 est comprise entre 5mm et 30mm, de préférence de l'ordre de 20mm.

La déformation du capot avant 10 selon l'invention va maintenant être décrit plus en détails au regard des figures 3 à 6, illustrant notamment la déformation de l'orifice 18 ménagé dans la paroi intérieure 11. Sur la figure 3, le capot 10 est dans une position de repos non déformé et s'apprête à recevoir l'impacteur 14. Sur la figure 4, quand l'impacteur 14, du type « choc hanche », vient en contact sensiblement contre le bord avant 15 du capot 10, celui-ci pli d'abord sous un effort F1 (figure 4). L'effort de réaction engendré par le capot 10 doit alors rester sous contrôle, c'est-à-dire sans déformation de l'orifice 18 et sans dépasser une valeur critique d'effort, à savoir en maintenant sensiblement un écartement e1 entre les deux bords longitudinaux de l'orifice 18, à savoir ceux de plus grande longueur.

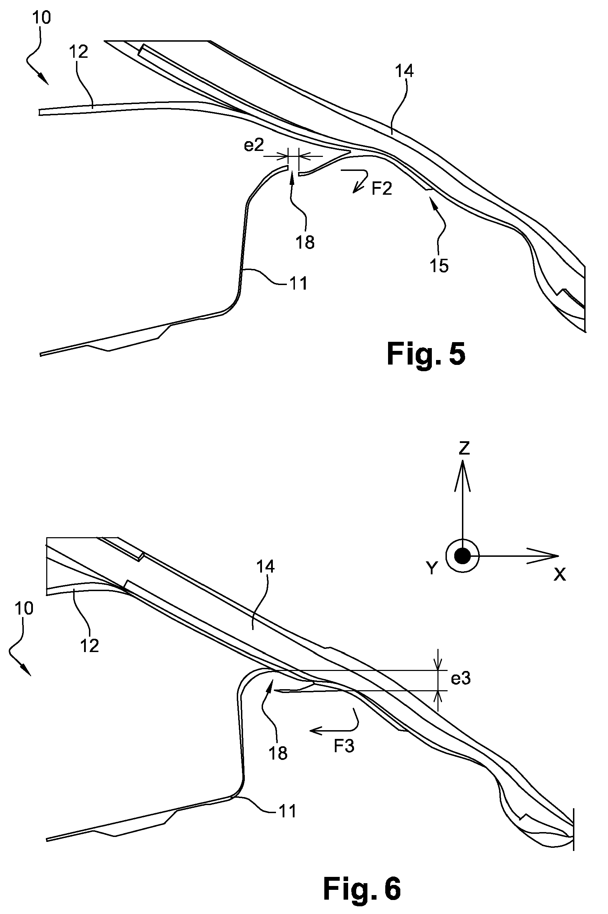

Ensuite, comme représenté sur la figure 5, le bord avant 15 de la paroi intérieure 11 du capot avant 10 commence à se déformer autour de l'orifice 18, selon la flèche F2 sur la figure 5, de sorte qu'un écartement e2 entre les bords longitudinaux de l'orifice 18 soit différent de l'écartement e1 au repos (figure 3). Cette rotation des parois du capot 10 est notamment due aux degrés de liberté de l'impacteur. Enfin, comme représenté sur la figure 6, la déformation se poursuit sensiblement avec un effort selon la flèche F3 sur la figure 6, de sorte que l'orifice 18 soit complètement déformé avec ses bords longitudinaux se retrouvant sensiblement l'un au-dessus de l'autre selon l'axe vertical Z, de sorte à avoir un écartement e3 différent des écartements e1 et e2. Dans cette position de déformation représentée sur la figure 6, le capot avant 10 est alors arrivé en fin de choc, où la déformation n'est plus possible.

Ainsi, l'orifice 18 permet au capot avant 10 de se déformer en cisaillement et non en compression, dans le cas où l'orifice aurait été de forme circulaire, ce qui permet d'optimiser et de piloter précisément la déformation. En effet, il est ainsi possible, selon les dimensions choisies de l'orifice 18 (longueur et largeur), de déterminer au plus juste nécessaire la taille de l'orifice 18, afin de répondre parfaitement aux niveaux d'efforts recherchés pour garantir l'intégrité d'un piéton. Notamment, plus grande est la longueur L3 de l'orifice 18, plus on optimise le cisaillement lors de la déformation du capot avant 10. Cette solution a aussi l'avantage de garder de la raideur sur l'ensemble de la zone avant du capot 10, afin de ne pas dégrader les sur-courses du capot 10 lors de sa fermeture.

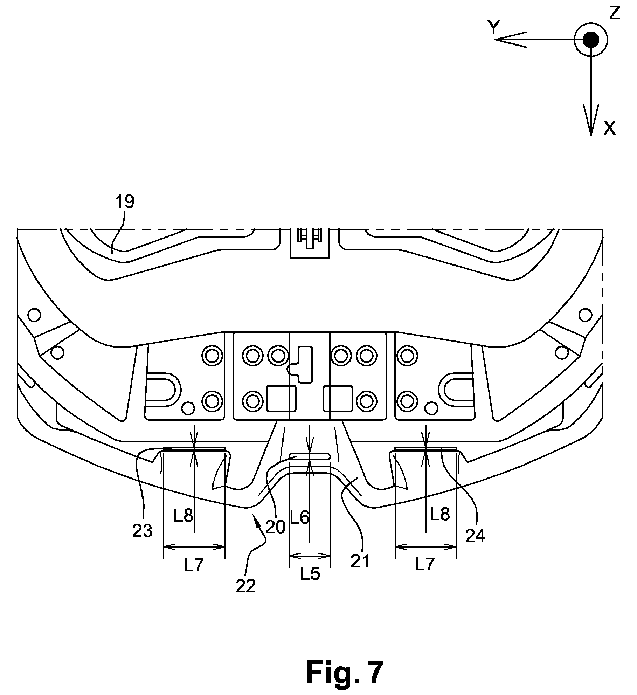

Dans la variante de réalisation représentée sur la figure 7, où uniquement la paroi intérieure du capot avant 10 selon l'invention est représentée pour des raisons de clarté, la paroi intérieure 19 comporte un premier orifice 20, ménagé dans un bossage 21 central de la paroi intérieure 19, agencé sensiblement au centre et sur le bord avant 22 de la paroi intérieure 19. Comme pour le mode de réalisation du capot avant 10 représenté sur les figures 1 à 6, le premier orifice 20 est de forme sensiblement rectangulaire, orienté transversalement par rapport à l'axe longitudinal X du véhicule et avec des dimensions prédéterminées, de sorte à piloter en cisaillement l'effort de déformation du capot 10 en cas de choc au niveau du bord avant 22.

Dans la variante de réalisation représentée sur la figure 7, la paroi intérieure 19 comporte avantageusement des orifices additionnels 23, 24, de forme sensiblement rectangulaire et orientés transversalement par rapport à l'axe longitudinal X du véhicule, à savoir sensiblement parallèlement au premier orifice 20 central. Plus particulièrement, les deux orifices additionnels 23, 24 sont agencés au niveau du bord avant 22 et de part et d'autre de l'orifice 20 central par rapport à l'axe longitudinal X.

Comme précédemment pour le mode de réalisation du capot avant 10 avec un seul orifice 18 central, les orifices 20, 23, 24 ont des dimensions prédéterminées et sont agencés de sorte que la paroi intérieure 19 du capot avant 10 soit sollicitée en cisaillement, lors de sa déformation consécutive à un choc, notamment du type « choc hanche ». L'effort peut ainsi être piloté sur une large plage du capot avant 10, grâce notamment aux trois orifices 20, 23, 24 répartis sensiblement le long du bord avant 22, ce qui permet de répondre aux exigences de sécurité sur l'ensemble de l'avant du capot.

A titre d'exemple, la longueur L5 de l'orifice 20 central est comprise entre 80mm et 150mm, de préférence de l'ordre de 90mm, et la largeur L6 de l'orifice 20 central est comprise entre 5mm et 30mm, de préférence de l'ordre de 10mm. De même, les orifices additionnels 23, 24 ont chacun une longueur L7 comprise entre 80mm et 150mm, de préférence de l'ordre de 90mm, et une largeur L8 comprise entre 5mm et 25mm, de préférence de l'ordre de 10mm, pour une longueur du capot 10 de l'ordre de 750mm et une largeur du capot 10 de l'ordre de 1440mm.

D'une façon générale, quel que soit le mode de réalisation du capot avant 10 selon l'invention, avec un seul orifice 18 central (figures 1 à 6) ou avec plusieurs orifices 20, 23, 24 agencés sur le bord avant 22 de la paroi intérieure 19 (figure 7), la position, le nombre et la grandeur des orifices sont déterminés suivant les besoins de raideur du capot avant 10 à atteindre. L'avantage est donc de pouvoir positionner suivant les besoins ces orifices sur toute la longueur de capot (figure 7) ou sur une partie bien spécifique (figures 1 et 2), tout en permettant cette sollicitation en cisaillement caractéristique qui permet de piloter au mieux l'effort de la déformation du capot avant 10 en cas de choc.

L'invention n'est pas limitée aux différents modes de réalisation décrits ci-dessus. Notamment, la forme et les dimensions des orifices 18, 20, 23, 24 transversaux ménagés dans la paroi intérieure 11, 19 au niveau du bord avant 15, 22 du capot avant 10 selon l'invention sont non limitatives et dépendent de la raideur souhaitée du capot en cas de déformation consécutive à un choc, notamment de type « choc hanche ».

Par ailleurs, la forme des orifices 18, 20, 23, 24 peut être différente, tant qu'elle reste sensiblement rectangulaire ou équivalente, pour permettre cette déformation spécifique en cisaillement du bord avant de la paroi intérieure du capot avant en cas de choc.

L'invention s'applique à tout type de véhicule automobile devant respecter les normes de sécurité en vigueur. Un tel capot avant selon l'invention est notamment installé sur tout type de véhicule automobile dont la face avant est fortement contrainte, en termes de dimensions et/ou de design.

## Revendications

1. Capot avant (10) de véhicule automobile comportant une première paroi intérieure (11 ; 19) et une seconde paroi (12) extérieure reliées entre elles et des moyens de liaison à la carrosserie (13) du véhicule, ladite paroi intérieure (11 ; 19) comportant au moins un premier orifice (18; 20) de forme sensiblement rectangulaire, lequel premier orifice (18 ; 20) :
- est orienté transversalement par rapport à un axe longitudinal (X) du véhicule,
- est agencé au niveau d'un bord avant (15; 22) de ladite paroi intérieure (11 ; 19),
capot **caractérisé en ce que** ladite paroi intérieure (11 ; 19) comporte un bossage central (17 ; 21) au niveau dudit bord avant (15 ; 22), conformé pour s'adapter aux contraintes de la face avant du véhicule imposées par la présence d'une empreinte pour le logo de la marque du véhicule, **et en ce que** ledit premier orifice (18 ; 20) est réalisé dans ledit bossage (17 ; 21) et comporte des dimensions (L3, L4 ; L5, L6) prédéterminées, de sorte à piloter l'effort de déformation du capot (10) en cas de choc au niveau dudit bord avant (15 ; 22).

2. Capot (10) selon la revendication précédente, **caractérisé en ce que** ledit premier orifice (18) a une longueur (L3) comprise entre 60mm et 80mm, de préférence de l'ordre de 70mm, et une largeur (L4) comprise entre 5mm et 30mm, de préférence de l'ordre de 20mm, pour une longueur (L1) du capot (10) de l'ordre de 750mm et une largeur (L2) du capot (10) de l'ordre de 1440mm.

3. Capot (10) selon la revendication 1, **caractérisé en ce qu'**il comporte des orifices (23, 24) additionnels de forme sensiblement rectangulaire, ménagés dans ladite paroi intérieure (19).

4. Capot (10) selon la revendication précédente, **caractérisé en ce que** lesdits orifices additionnels (23, 24) sont orientés transversalement par rapport audit axe longitudinal (X) du véhicule, sensiblement parallèlement audit premier orifice (20).

5. Capot (10) selon la revendication précédente, **caractérisé en ce que** ladite paroi intérieure (19) comporte deux orifices additionnels (23, 24) agencés au niveau dudit bord avant (22) du capot (10) et de part et d'autre dudit premier orifice (20) selon l'axe longitudinal (X) du véhicule.

6. Capot selon l'une quelconque des revendications 3 à 5, **caractérisé en ce que** ledit premier orifice (20) a une longueur (L5) comprise entre 80mm et 150mm, de préférence de l'ordre de 90mm, et une largeur (L6) comprise entre 5mm et 30mm, de préférence de l'ordre de 10mm, et lesdits orifices additionnels (23, 24) ont chacun une longueur (L7) comprise entre 80mm et 150mm, de préférence de l'ordre de 90mm, et une largeur (L8) comprise entre 5mm et 25mm, de préférence de l'ordre de 10mm.

7. Véhicule automobile comportant un capot avant (10) selon l'une quelconque des revendications précédentes.

## Patentansprüche

1. Fronthaube (10) für ein Kraftfahrzeug, welche eine erste innere Wand (11; 19) und eine zweite äußere Wand (12), welche miteinander verbunden sind, und Mittel zur Verbindung mit der Karosserie (13) des Fahrzeugs aufweist, wobei die innere Wand (11; 19) mindestens eine erste Öffnung (18; 20) von im Wesentlichen rechteckiger Form aufweist, wobei die erste Öffnung (18; 20):
- in Querrichtung in Bezug auf eine longitudinale Achse (X) des Fahrzeugs ausgerichtet ist,
- im Bereich eines vorderen Randes (15; 22) der inneren Wand (11; 19) angeordnet ist,
wobei die Haube **dadurch gekennzeichnet ist, dass** die innere Wand (11; 19) einen zentralen Buckel (17; 21) im Bereich des vorderen Randes (15; 22) aufweist, welcher angepasst ist, um sich an die Beanspruchungen der Frontseite des Fahrzeugs anzupassen, welche durch das Vorhandensein eines Eindruckes für das Logo der Marke des Fahrzeugs auferlegt werden, und dass die erste Öffnung (18; 20) in dem Buckel (17; 21) ausgeführt ist und vorgegebene Abmessungen (L3, L4; L5, L6) aufweist, um die Kraft zur Verformung der Haube (10) im Falle eines Aufpralls im Bereich des vorderen Randes (15; 22) zu steuern.

2. Haube (10) nach dem vorhergehenden Anspruch, **dadurch gekennzeichnet, dass** die erste Öffnung (18) eine Länge (L3), welche zwischen 60 mm und 80 mm, vorzugsweise in der Größenordnung von 70 mm, liegt und eine Breite (L4) besitzt, welche zwischen 5 mm und 30 mm, vorzugsweise in der Größenordnung von 20 mm, liegt, bei einer Länge (L1) der Haube (10) in der Größenordnung von 750 mm und einer Breite (L2) der Haube (10) in der Größenordnung von 1440 mm.

3. Haube (10) nach Anspruch 1, **dadurch gekennzeichnet, dass** sie zusätzliche Öffnungen (23, 24) von im Wesentlichen rechteckiger Form aufweist, welche in der inneren Wand (19) eingebracht sind.

4. Haube (10) nach dem vorhergehenden Anspruch, **dadurch gekennzeichnet, dass** die zusätzlichen Öffnungen (23, 24) in Querrichtung in Bezug auf die longitudinale Achse (X) des Fahrzeugs, im Wesentlichen parallel zur ersten Öffnung (20) ausgerichtet sind.

5. Haube (10) nach dem vorhergehenden Anspruch, **dadurch gekennzeichnet, dass** die innere Wand (19) zwei zusätzliche Öffnungen (23, 24) aufweist, welche im Bereich des vorderen Randes (22) des Haube (10) und beiderseits der ersten Öffnung (20) gemäß der longitudinalen Achse (X) des Fahrzeugs angeordnet sind.

6. Haube nach einem der Ansprüche 3 bis 5, **dadurch gekennzeichnet, dass** die erste Öffnung (20) eine Länge (L5), welche zwischen 80 mm und 150 mm, vorzugsweise in der Größenordnung von 90 mm, liegt und eine Breite (L6) besitzt, welche zwischen 5 mm und 30 mm, vorzugsweise in der Größenordnung von 10 mm, liegt, und die zusätzlichen Öffnungen (23, 24) jeweils eine Länge (L7), welche zwischen 80 mm und 150 mm, vorzugsweise in der Größenordnung von 90 mm, liegt, und eine Breite (L8) besitzen, welche zwischen 5 mm und 25 mm, vorzugsweise in der Größenordnung von 10 mm, liegt.

7. Kraftfahrzeug, umfassend eine Fronthaube (10) nach einem der vorhergehenden Ansprüche.

## Claims

1. Front bonnet (10) of a motor vehicle comprising a first inner wall (11; 19) and a second outer wall (12) linked together and means for linking to the bodywork (13) of the vehicle, said inner wall (11; 19) comprising at least one first substantially rectangular orifice (18; 20), said first orifice (18; 20):
- being oriented transversely in relation to a longitudinal axis (X) of the vehicle,
- being arranged at a front edge (15; 22) of said inner wall (11; 19),
**the bonnet being characterized in that** said inner wall (11; 19) comprises a central boss (17; 21) at said front edge (15; 22), formed to adapt to the stresses of the front face of the vehicle imposed by the presence of an imprint for the logo of the make of the vehicle, **and in that** said first orifice (18; 20) is produced in said boss (17; 21) and has predetermined dimensions (L3, L4; L5, L6) so as to control the deformation force of the bonnet (10) in case of impact at said front edge (15; 22).

2. Bonnet (10) according to the preceding claim, **characterized in that** said first orifice (18) has a length (L3) of between 60 mm and 80 mm, preferably of the order of 70 mm, and a width (L4) of between 5 mm and 30 mm, preferably of the order of 20 mm, for a length (L1) of the bonnet (10) of the order of 750 mm and a width (L2) of the bonnet (10) of the order of 1440 mm.

3. Bonnet (10) according to Claim 1, **characterized in that** it comprises additional substantially rectangular orifices (23, 24), formed in said inner wall (19).

4. Bonnet (10) according to the preceding claim, **characterized in that** said additional orifices (23, 24) are oriented transversely in relation to said longitudinal axis (X) of the vehicle, substantially parallel to said first orifice (20).

5. Bonnet (10) according to the preceding claim, **characterized in that** said inner wall (19) comprises two additional orifices (23, 24) arranged at said front edge (22) of the bonnet (10) and on either side of said first orifice (20) along the longitudinal axis (X) of the vehicle.

6. Bonnet according to any one of Claims 3 to 5, **characterized in that** said first orifice (20) has a length (L5) of between 80 mm and 150 mm, preferably of the order of 90 mm, and a width (L6) of between 5 mm and 30 mm, preferably of the order of 10 mm, and said additional orifices (23, 24) each have a length (L7) of between 80 mm and 150 mm, preferably of the order of 90 mm, and a width (L8) of between 5 mm and 25 mm, preferably of the order of 10 mm.

7. Motor vehicle comprising a front bonnet (10) according to any one of the preceding claims.
